# EUROPÄISCHE PATENTSCHRIFT

(11) **EP 2 492 182 B1**
(45) Veröffentlichungstag und Bekanntmachung des Hinweises auf die Patenterteilung: **08.04.2015**
(21) Anmeldenummer: 12156795.2
(22) Anmeldetag: 24.02.2012
(51) Int. Cl.: B62M 6/90, B62K 19/30, B62J 6/02

(54) **Fahrrad mit Elektroantrieb**
Bicycle with electric drive
Vélo doté d'un entraînement électronique

(30) Priorität: 24.02.2011 DE 202011003180 U
(43) Veröffentlichungstag der Anmeldung: 29.08.2012
(73) Patentinhaber: Derby Cycle Werke GmbH, 49661 Cloppenburg (DE)
(72) Erfinder: Kaiser, Thomas, 87463 Schrattenbach (DE); Wassermann, Christian, 87647 Kraftisried (DE)
(74) Vertreter: Jabbusch, Matthias

(56) Entgegenhaltungen:
- WO-A1-2010/148618
- CN-U- 201 559 790
- DE-U1-202007 003 313
- DE-U1-202010 005 459
- US-A- 4 970 630
- US-A1- 2005 126 840

## Beschreibung

Die Erfindung betrifft ein Fahrrad mit Elektroantrieb gemäß den oberbegrifflichen Merkmalen des Anspruches 1. Hierbei sollen auch Elektroroller umfasst sein.

Bei Fahrrädern wird vermehrt ein Elektroantrieb zur Unterstützung des Fahrers eingesetzt, meist als sog. Pedelec. Der Energiespeicher wird zunehmend als Lithium-Ionen-Akku oder NiMH-Zellen ausgeführt und im Haupt-Rahmenrohr eingebaut. Hierbei gibt es Lösungen mit fest eingebauter Batterie, wobei das Fahrrad dann an eine Ladestation oder ein Ladegerät angeschlossen werden muss. Es sind auch Akkus bekannt, die aus dem Fahrrad entnommen werden können und so zum Ladegerät, z. B. in der Wohnung oder im Büro gebracht werden können. Diese Alternative hat zudem den Vorteil, dass ein aufgeladener Ersatz-Akku bereitstehen kann, so dass mit einem raschen Akku-Wechsel die Weiterfahrt umgehend fortgesetzt werden kann.

Solche schnell austauschbaren Akkus sind beispielsweise in der EP 1 142 780 gezeigt. Dabei wird ein stangenförmiges Batteriepack von vorne in das Haupt-Rahmenrohr eines Faltrades eingeschoben und lediglich von einer Klappe abgedeckt. Der Diebstahlschutz für die relativ teuren Akkus ist hierbei jedoch ungenügend. Zudem ist die Halterung des Batteriemoduls nicht näher beschrieben, so dass zu befürchten ist, dass sich das relativ schwere Akkumodul bei starken Bremsvorgängen lockert. Zudem benötigt der Fahrer des Rades bzw. Rollers zum Akkuwechsel zwei Hände, nämlich eine zum Aufhalten der Klappe und eine zum Einschieben des Akkus, so dass das Gefährt hierzu oft an eine Hauswand oder eine Laterne angelehnt werden muss.

Ein anderes Fahrrad ist aus der WO 2010/148618 A1 bekannt. Bei diesem bekannten Fahrrad ist der Akku in das Oberrohr integriert. WO 2010/148 618 wird als nächstliegenden Stand der Technik gegenüber dem Gegenstand des Anspruchs 1 angesehen.

Der vorliegenden Erfindung liegt daher die Aufgabe zugrunde, ein Fahrrad mit Elektroantrieb zu schaffen, das bei einfacher Austauschbarkeit des Akkumoduls eine sichere Halterung bietet. Zudem sollen zusätzliche Funktionen am Akkumodul auf einfache Weise verwirklicht werden.

Diese Aufgabe wird gelöst durch ein Fahrrad mit den Merkmalen gemäß Anspruch 1. Bevorzugte Ausführungen sind Gegenstand der abhängigen Ansprüche.

Die vorgeschlagene Gestaltung des Akkumoduls ermöglicht einen schnellen Austausch und ein sicheres, geschütztes Mitführen des Akkumoduls im Fahrrad. Dabei ist das Akkumodul durch ein Zusatzmodul in Form einer Leuchte zu einer Baueinheit ergänzt, wodurch sich bei kompakter Bauweise eine sichere Halterung im Rahmenrohr ergibt. Bevorzugte Ausführungen der Erfindung werden nachfolgend anhand der Zeichnungen erläutert. Hierbei zeigen:
- Fig. 1:: eine Perspektivansicht des Vorderbereichs eines Fahrrads,
- Fig. 2:: eine Perspektivansicht entsprechend Fig. 1 mit eingesetztem Akkumodul.
- Fig. 3:: eine Einzelansicht des Akkumoduls mit einem Leuchtenmodul, und
- Fig. 4:: einen Längsschnitt durch das Rahmenrohr mit Halterung des Akkumoduls.

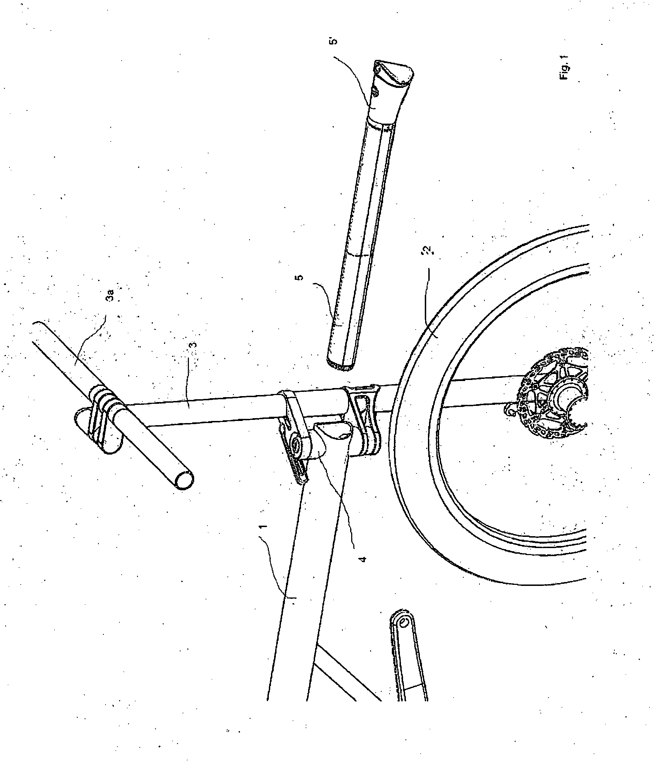

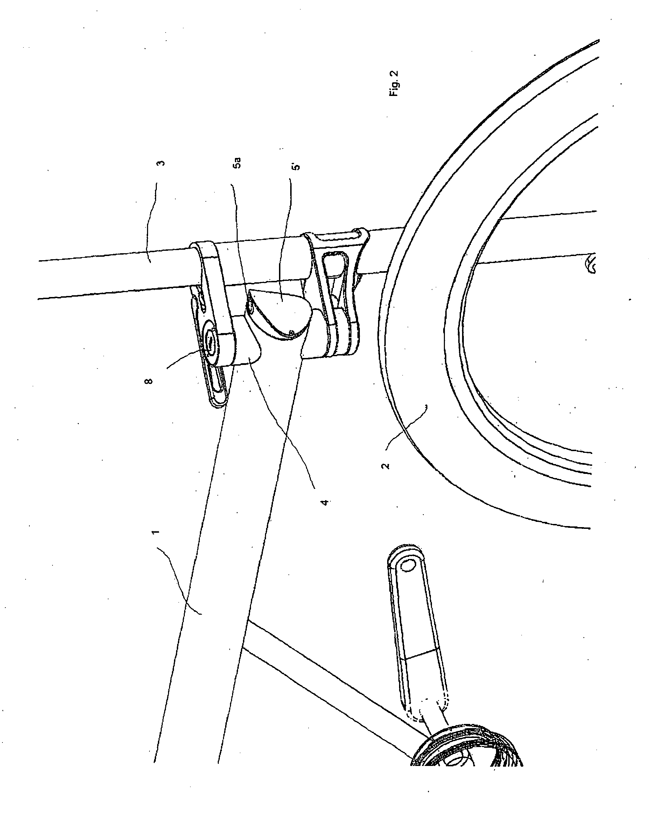

Wie in Fig. 1 und 2 dargestellt, ist ein Vorderrad 2 in Art einer Einarm-Gabel über ein Lenkerrohr 3 mit einem hohlen Rahmenrohr 1 des Fahrrads lenkbar verbunden. Wesentlich ist dabei, dass das vordere und/oder hintere Ende des Rahmenrohrs 1 frei zugänglich ist. Hierzu ist in der dargestellten Ausführung des Fahrrads bzw. dessen Rahmen eine Einarm-Gabel vorgesehen, insbesondere in der Ausführung als sog. Doppelbrückengabel, um eine hohe Stabilität zu erzielen. Das Lenkerrohr 3 mit einer Lenkstange 3a ist über einen Lenkerkopf 4 an das Rahmenrohr 1 um die Hochachse drehbar gelagert, wobei der nach vorne weisende Querschnitt des Rahmenrohrs 1 frei bleibt, um darin ein Akkumodul 5 einzuschieben. Das Akkumodul 5 weist ein Zusatzmodul 5' auf, das hier als Leuchte oder Scheinwerfer ausgebildet ist.

Der Einsatz der hier dargestellten Einarm-Gabel ist insbesondere zum Klappen des Gefährts vorteilhaft, da hierdurch ein zusätzliches Klapp- bzw. Faltgelenk eingespart werden kann. Das Lenkerrohr 3 kann nämlich nach Lösen entsprechender Klemmhebel in das Gabelbein hineingeschoben werden und die Lenkstange 3a um 90° zur Spur gedreht werden. Zudem kann die Gabel um nahezu 180° um die Lenkachse, hier in Fahrtrichtung stehend mit dem Uhrzeigersinn gedreht werden, wodurch sich ein kürzerer Radstand und damit eine kürzere Gesamtlänge des Gefährts ergibt.

In Fig. 2 ist die in das Rahmenrohr 1 eingeschobene Position des Akkumoduls 5 gezeigt, wobei das Zusatzmodul 5' bündig mit dem vorderen Ende des Rahmenrohrs 1 verläuft oder bündig damit abschließt. Am oberen Bereich der Leuchte ist ein Betätigungsschalter 5a zum Ein-/Ausschalten der Leuchte frei zugänglich.

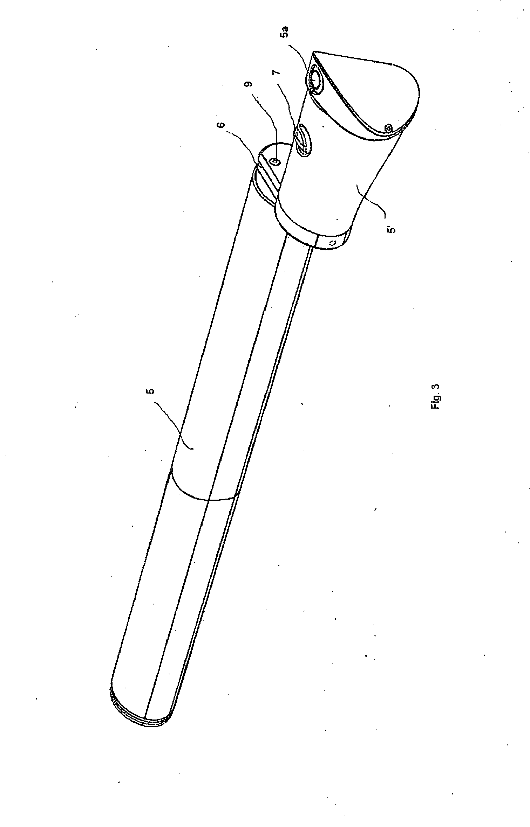

In Fig. 3 ist das Akkumodul 5 vergrößert dargestellt, wobei das Zusatzmodul 5'(Leuchte) mit einer Verbindung 6, insbesondere in Art einer Schwalbenschwanz-Führung angekoppelt ist. Hierdurch lassen sich unterschiedliche Zusatzmodule 5' an das Akkumodul 5 ankoppeln, z. B. auch ein akustischer Signalgeber in Art einer Hupe. Eine solche kann auch in die Leuchte integriert sein, die ggf. auch mit einem Reflektor kombiniert sein kann. Das Akkumodul 5 und das Zusatzmodul 5' können auch fest miteinander verbunden sein, z. B. durch ein gemeinsames Gehäuse. Das Akkumodul 5 kann auch von der hier nicht dargestellten Rückseite des Rahmenrohrs 1 in analoger Weise eingeschoben werden, wobei dann das Zusatzmodul 5' bevorzugt als Rückleuchte ausgebildet sein kann. Bei längeren Rahmenrohren 1 ist es auch möglich, dass ein Akkumodul 5 von der Vorderseite und ein zweites Akkumodul 5 von der Rückseite (benachbart zur Sattelstütze) her eingeschoben wird und zusammen eine Speichereinheit ergeben, wobei jeweils ein Zusatzmodul 5' vorgesehen ist, bevorzugt vorne als Scheinwerfer und rückseitig als Rücklicht oder Reflektor.

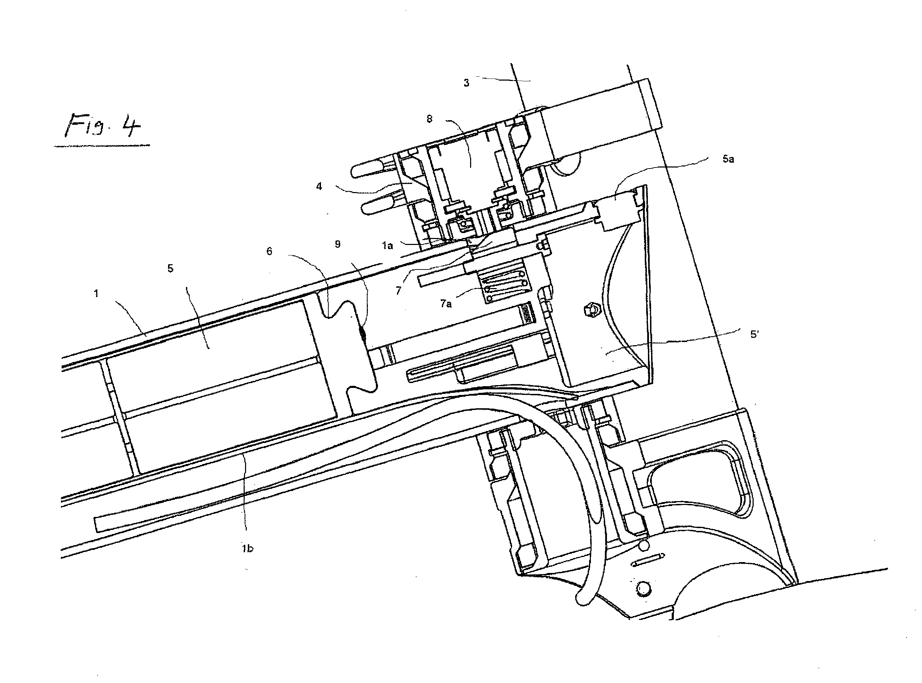

Benachbart zur Verbindung 6 ist ein elektrischer Kontakt 9 ersichtlich, mit dem die elektrische Versorgung des Zusatzmoduls 5' vom Akkumodul 5 aus hergestellt werden kann. Von Bedeutung ist zudem ein federbelastetes Rastelement 7, mit dem das Akkumodul 5 mit angeschlossenem Zusatzmodul 5' sicher im Rahmenrohr 1 gehalten wird. Hierbei ist ein formschlüssiges Rastelement 7 bevorzugt, das in eine entsprechende Ausnehmung 1a im Rahmenrohr 1 eingreift (vgl. Fig. 4), auch wenn eine kraftschlüssige Halterung, z. B. mit einem aufwölb- oder dehnbaren Klemmelement denkbar ist.

Das Zusatzmodul 5' kann auch über einen Dynamo gespeist werden. Der Kontakt vom Dynamo zum Zusatzmodul 5' kann durch das Akkumodul 5 erfolgen oder ,über eine zusätzliche Kontaktierung des Zusatzmoduls 5'. <Über eine solche Kontaktierung (z. B. Federzungen) können auch andere Beleuchtungen (z. B. das Rücklicht) versorgen werden.

In Fig. 4 ist die Verriegelungsstellung des Rastelements 7 im Rahmenrohr 1 gezeigt. An dem hier nach links weisenden Ende des Akkumoduls 5 ist bevorzugt wenigstens ein federndes Bauteil (nicht dargestellt) vorgesehen, dass zugleich als Kontakt ausgebildet ist, so dass zusammen mit dem Rastelement 7 eine sichere Halterung der Baueinheit aus Akkumodul und Zusatzmodul 5' im hohlen Rahmenrohr 1 gegeben ist. Der Querschnitt des Akkumoduls 5 ist hierbei an den Innendurchmesser (oder von der Kreisform abweichende Formquerschnitte) des Rahmenrohrs 1 angepasst. Im unteren Bereich des Rahmenrohrs 1 ist eine Trennwand 1 b vorgesehen, unter der Kabel und/oder Bowdenzüge oder Hydraulikleitungen verlegt werden können. Die Trennwand 1b neigt sich zum Zusatzmodul 5' hin, so dass zum Einschieben des Akkumoduls 5 eine Art Rampe gebildet wird, wodurch ein leichtes Einschieben gewährleistet wird.

Diese Kabel oder Bowdenzüge bzw. Leitungen treten durch eine zweite, untere Ausnehmung analog zu der oberen Ausnehmung 1 a in den Lenkkopf 4 aus. Über der oberen Ausnehmung 1a, in die das Rastelement 7 formschlüssig einschnappt (da von einer Druckfeder 7a beaufschlagt), ist ein Sicherheitsschloss 8 im Lenkkopf 4 eingebaut. Damit lässt sich das Rastelement 7 entriegeln, so dass erst dann das Akkumodul 5 entnommen werden kann. Nach dem Entriegeln (mit einem üblichen Schlüssel) und Niederdrücken des Sicherheitsschlosses 8 springt das Akkumodul 5 unter Wirkung der oben beschriebenen Kontaktfeder etwas aus dem Rahmenrohr 1 nach vorne hervor, so dass es leicht gegriffen und entnommen werden kann, ohne den Entriegelungs-Mechanismus weiter zu betätigen. Somit ist eine echte Einhand-Bedienung möglich bzw. die zweite Hand frei, um das Gefährt bzw. Fahrrad zu halten. Dies gilt auch wieder für das Einschieben eines geladenen Akkumoduls 5. Die Freigabe des diebstahlsicher verwahrten Akkumoduls kann auch durch ein digitales Schloss mittels Chip-Karte oder Transponder erfolgen. Denkbar ist auch das Rastelement 7 nach Art eines Druckknopfes direkt oder indirekt zu betätigen. Die Verriegelung des Akkumoduls 5 kann auch über einen Haltefedermechanismus z. B. in Art einer Rastzunge erfolgen oder durch Einschieben und Drehen in Art eines Bajonettverschlusses. Das hier vordere Zusatzmodul 5' muss somit nicht notwendigerweise die Verriegelungsfunktion aufweisen, sondern kann z. B. nur der Führung des Akkumoduls dienen oder nur designerischen Zwecken dienen, z. B. der Anbringung eines Logos.

Somit kann der Austausch der Batterien bzw. des Akkumoduls 5 rasch erfolgen. Auch können andere Zusatzmodule 5' über die Schiebe-Verbindung 6 leicht angekuppelt werden oder auch nur das Zusatzmodul 5' alleine in das Rahmenrohr eingesetzt und dort verriegelt werden, wenn z. B. keine Elektro-Unterstützung des Fahrrades oder Rollers gewünscht wird. Für diesen Zweck kann das Zusatzmodul 5' eine eigene Stromversorgung in Form von Batterien aufweisen. Durch die schnelle und sichere Verstauung der Baueinheit 5/5' im Rahmenrohr 1 kann somit der Fahrbetrieb wieder rasch aufgenommen werden. Diese Art der Halterung ist nicht auf einspurige Fahrräder beschränkt, sondern kann auch in ähnlichen Gefährten wie Dreirädern oder Rollern vorteilhaft eingesetzt werden.

## Patentansprüche

1. Fahrrad mit Elektroantrieb und einem Rahmenrohr (1), in das ein Akkumodul (5) einsetzbar ist, wobei das Akkumodul (5) über eine Verbindung (6) mit wenigstens einem Zusatzmodul (5i) gekoppelt ist und am vorderen und/oder hinteren Ende des Rahmenrohrs (1) gehalten ist, **dadurch gekennzeichnet, dass** das Zusatzmodul (5i) als Leuchte ausgebildet ist.

2. Fahrrad nach Anspruch 1, **dadurch gekennzeichnet, dass** am Zusatzmodul (5') ein Rastelement (7) vorgesehen ist, das in eine Ausnehmung (1a) des Rahmenrohrs (1) eingreift.

3. Fahrrad nach Anspruch 2, **dadurch gekennzeichnet, dass** das Rastelement (7) von einer Druckfeder (7a) beaufschlagt ist.

4. Fahrrad nach Anspruch 3, **dadurch gekennzeichnet, dass** ein der Druckfeder (7a) entgegenwirkendes Sicherheitsschloss (8) vorgesehen ist.

5. Fahrrad nach einem der Ansprüche 1 bis 4, **dadurch gekennzeichnet, dass** die Verbindung (6) zwischen dem Zusatzmodul (5') und dem Akkumodul (5) als Schwalbenschwanz-Führung ausgebildet.

6. Fahrrad nach Anspruch 4, **dadurch gekennzeichnet, dass** das Sicherheitsschloss (8) im Lenkkopf (4) des Rahmenrohrs (1) vertieft eingesetzt ist.

7. Fahrrad nach einem der Ansprüche 1 bis 6, **dadurch gekennzeichnet, dass** das Zusatzmodul (5') mit dem Rahmenrohr (1) bündig verläuft oder abschließt und/oder ein Bedien-/Anzeigeelement des Akkumoduls (5) frei zugänglich bzw. einsehbar ist.

8. Fahrrad nach einem der Ansprüche 1 bis 7, **dadurch gekennzeichnet, dass** das Zusatzmodul (5') von dem Akkumodul (5) elektrisch versorgt ist und/oder eine autarke Stromversorgung aufweist und/oder von einem Dynamo gespeist ist.

9. Fahrrad nach einem der Ansprüche 1 bis 8, **dadurch gekennzeichnet, dass** im Rahmenrohr (1) eine Trennwand (1b) vorgesehen ist, die zum Zusatzmodul (5') hin als abgeflachte Rampe ausgeformt ist.

## Claims

1. A bicycle with electric drive and a frame tube (1), into which a rechargeable-battery module (5) can be inserted, wherein the rechargeable-battery module (5) is coupled via a connection (6) to at least one additional module (5i) and is held at the front and/or rear end of the frame tube (1), **characterised in that** the additional module (5i) is constructed as a lamp.

2. The bicycle according to Claim 1, **characterised in that** a latching element (7) is provided on the additional module (5'), which engages into a recess (1a) of the frame tube (1).

3. The bicycle according to Claim 2, **characterised in that** the latching element (7) is loaded by a compression spring (7a).

4. The bicycle according to Claim 3, **characterised in that** a security lock (8) counteracting the compression spring (7a) is provided.

5. The bicycle according to one of Claims 1 to 4, **characterised in that** the connection (6) between the additional module (5') and the rechargeable-battery module (5) is constructed as a dovetail guide.

6. The bicycle according to Claim 4, **characterised in that** the security lock (8) is inserted in the head tube (4) of the frame tube (1) in a recessed manner.

7. The bicycle according to one of Claims 1 to 6, **characterised in that** the additional module (5') runs or terminates flush with the frame tube (1) and/or a control/display element of the rechargeable-battery module (5) is freely accessible or visible.

8. The bicycle according to one of Claims 1 to 7, **characterised in that** the additional module (5') is electrically supplied by the rechargeable-battery module (5) and/or has an independent power supply and/or is fed by a dynamo.

9. The bicycle according to one of Claims 1 to 8, **characterised in that** a separating wall (1b) is provided in the frame tube (1), which is shaped towards the additional module (5') as a flattened ramp.

## Revendications

1. Bicyclette avec entraînement électrique et un tube de cadre (1) dans lequel un module d'accumulateur (5) peut être inséré, le module d'accumulateur (5) étant couplé au moyen d'un raccord (6) à au moins un module supplémentaire (5i) et fixé à l'extrémité avant et/ou arrière du tube de cadre (1) **caractérisée en ce que** le module supplémentaire (5i) est constitué comme un éclairage.

2. Bicyclette selon la revendication 1 **caractérisée en ce qu'** un élément à crans (7) est prévu sur le module supplémentaire (5') qui vient en prise dans un évidement (1a) du tube de cadre (1).

3. Bicyclette selon la revendication 2 **caractérisée en ce que** l'élément à crans (7) est sollicité par un ressort de pression (7a).

4. Bicyclette selon la revendication 3 **caractérisée en ce qu'**une fermeture de sécurité (8) opposée au ressort de pression (7a) est prévue.

5. Bicyclette selon l'une quelconque des revendications 1 à 4 **caractérisée en ce que** le raccord (6) est constitué entre le module supplémentaire (5') et le module d'accumulateur (5) comme un guidage à queue d'aronde.

6. Bicyclette selon la revendication 4 **caractérisée en ce que** la fermeture de sécurité (8) est insérée enfoncée dans la tête de direction (4) du tube de cadre (1).

7. Bicyclette selon l'une quelconque des revendications 1 à 6 **caractérisée en ce que** le module supplémentaire (5') ferme ou passe en affleurement avec le tube de cadre (1) et/ou un élément de commande/d'indication du module d'accumulateur (5) est librement accessible ou consultable.

8. Bicyclette selon l'une quelconque des revendications 1 à 7 **caractérisée en ce que** le module supplémentaire (5') est alimenté électriquement par le module d'accumulateur (5) et/ou comporte une alimentation en courant indépendante et/ou est .alimenté par une dynamo.

9. Bicyclette selon l'une quelconque des revendications 1 à 8 **caractérisée en ce qu'**une paroi de séparation (1b) est prévue dans le tube de cadre (1) qui est formée comme une rampe applatie vers le module supplémentaire (5').
